# EUROPEAN PATENT APPLICATION

(11) **EP 4 411 859 A1**
(43) Date of publication of application: **07.08.2024**
(21) Application number: 23206850.2
(22) Date of filing: 30.10.2023
(51) Int. Cl.: H01M 4/13, H01M 4/36, H01M 4/62, H01M 10/052, H01M 4/139, H01M 10/0525, H01M 4/133, H01M 4/1393, H01M 4/1395, H01M 4/02, H01M 4/134

(54) **ELECTRODE FOR RECHARGEABLE BATTERY**

(30) Priority: 06.02.2023 KR 20230015778
(71) Applicant: Samsung SDI Co., Ltd., Yongin-si, Gyeonggi-do 17084 (KR)
(72) Inventor: AN, Seonhyeok, 17084 Yongin-si (KR)
(74) Representative: Marks & Clerk LLP

(57) **Abstract**

An electrode for a rechargeable battery according to an embodiment of the present disclosure includes: a substrate; and a first active material layer and a second active material layer that are formed on the substrate and include different binders. The first active material layer and the second active material layer are disposed on the same plane.

## Description

### BACKGROUND OF THE INVENTION

### (a) Field of the Invention

The present disclosure relates to an electrode, and more particularly, to an electrode for a rechargeable battery.

### (b) Description of the Related Art

A stacked battery cell may be formed in an order of production of a reel electrode plate, a notching process, a sheet cutting process, stacking, and tab welding.

In the notching process and the sheet cutting process, a reel-shaped electrode plate is disposed between a pair of upper and lower knives or molds, and the electrode plate is formed in a form of a sheet having a desired shape by cutting by applying a strong shear force to a cutting portion to be cut.

In the cutting process, a shear force should be concentrated in as a small region as possible for a short period of time without affecting the periphery of the cutting portion of an object so that a defect such as detachment (or desorption), burr, or the like does not occur.

Concentration of the shear force depends on various factors such as a condition of the object such as tension of the electrode plate of the object to be cut, a degree of fixation of the cutting portion, or the like, a shape of the knife, and a clearance of the upper and lower knives, and a quality of a cut surface is determined by the concentration of shear force.

However, even if a condition of the process is optimized, it is not possible to completely prevent an impact from being transferred to a vicinity of the cutting portion due to a characteristic of the process, and the transferred impact causes detachment, a crack, and the like of a composite material coated and rolled on a foil.

In this case, when a detached active material is mixed, the mixed active material causes a damage to a separator and ignition of the battery. In addition, the detached portion does not play a role of the battery, so that a shortened lifespan and a decrease in a capacity of the battery cause deterioration in quality. Detachment of the active material may occur immediately after the cutting process, or may occur during an assembly process and a charging and discharging process.

In particular, even if the active material in a portion where the impact is transferred during the cutting process does not immediately fall due to a fine crack, the active material may be detached in a subsequent tab welding process so that the detached active material remains in the battery as a foreign substance, or the detachment of the active material may be accelerated through impregnation of an electrolyte and a charging and discharging process during charging and discharging so that a lifespan and a capacity of the battery are reduced.

### SUMMARY OF THE INVENTION

The present disclosure is to provide an electrode for a rechargeable battery capable of minimizing detachment of an active material during a cutting process.

An electrode for a rechargeable battery according to an embodiment of the present disclosure includes: a substrate; and a first active material layer and a second active material layer that are formed on the substrate and include different binders. The first active material layer and the second active material layer are disposed on the same plane.

The first active material layer may include a low-resistance binder, and the second active material layer may include a high adhesive binder having stronger adhesion than the low-resistance binder.

The first active material layer may include a first lower binder layer formed on the substrate and including the low-resistance binder, and a first upper active material layer formed on the first lower binder layer, and the second active material layer may include a second lower binder layer formed on the substrate and including the high adhesive binder, and a second upper active material layer formed on the second lower binder layer.

The first upper active material layer and the second upper active material layer may include the same binder material.

The first lower binder layer and the second lower binder layer may further include a conductive material, and the conductive material may include at least one of denka black, carbon black, acetylene black, ketchen black, a carbon fiber, graphene, and a carbon nanotube (CNT).

Thicknesses of the first lower binder layer and the second lower binder layer may be less than thicknesses of the first upper active material layer and the second upper active material layer.

The second active material layer may surround at least a portion of the first active material layer.

A width of the second active material layer may be 0.01 mm to 0.5 mm.

The substrate may have a form of a cut sheet, and the second active material layer may be formed at a region where the substrate is cut.

The low-resistance binder may include at least one of an acryl-based binder, sodium-carboxymethylcellulose (Na-CMC), lithium-carboxymethylcellulose (Li-CMC), alginic acid derivative, chitosan derivative, polyvinyl alcohol (PVA), polyacrylic acid (PAA), polysodiumacrylate (Na-PAA), polyvinylpyrrolidone (PVP), polyacrylamide (PAAm), a vinylidene fluoride/hexafluoropropylene copolymer (P(VDF-HFP)), polyvinylidene fluoride (PVDF), polyacrylonitrile (PAN), water-borne styrene-butadiene rubber (SBR), water-borne butadiene rubber (BR), and a modified product thereof.

The high adhesive binder may include water-borne styrene-butadiene rubber (SBR) or polyacrylic acid (PAA).

At least some of the above and other features of the invention are set out in the claims.

According to the embodiment of the present disclosure, it is possible to provide a high-quality battery by preventing a fine crack and a progressive detachment of an active material from occurring in a region where a shear force transferred to a cutting portion is indirectly transferred during a forming process of a negative electrode sheet.

### BRIEF DESCRIPTION OF THE DRAWINGS

FIG. 1 is a plane view of a negative electrode according to an embodiment of the present disclosure.
FIG. 2 is a cross-sectional view taken along a line II-II of FIG. 1.
FIG. 3 is a view for explaining a method for cutting an electrode plate according to an embodiment of the present disclosure.
FIG. 4 is a cross-sectional view of an electrode for a rechargeable battery according to another embodiment of the present disclosure.
FIG. 5 is a schematic view of a stacked electrode assembly according to an embodiment of the present disclosure.

### DETAILED DESCRIPTION OF THE EMBODIMENTS

The present disclosure will be described more fully hereinafter with reference to the accompanying drawings, in which embodiments of the disclosure are shown. As those skilled in the art would realize, the described embodiments may be modified in various different ways, all without departing from the scope of the present disclosure.

Since sizes and thicknesses of constituent members shown in the accompanying drawings are arbitrarily given for better understanding and ease of description, the present disclosure is not limited to the illustrated sizes and thicknesses.

In the drawings, the thickness of layers, films, panels, regions, etc., are exaggerated for clarity. In the drawings, for better understanding and ease of description, thicknesses of some layers and areas are exaggeratedly displayed. It will be understood that when an element such as a layer, film, region, or substrate is referred to as being "on" or "above" another element, it may be directly on the other element or intervening elements may also be present.

In addition, unless explicitly described to the contrary, the word "comprise", and variations such as "comprises" or "comprising", will be understood to imply the inclusion of stated elements but not the exclusion of any other elements.

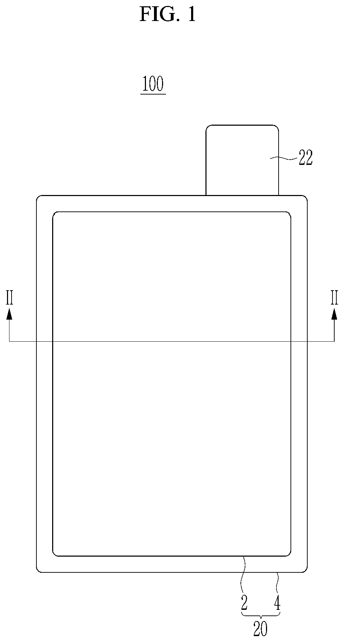

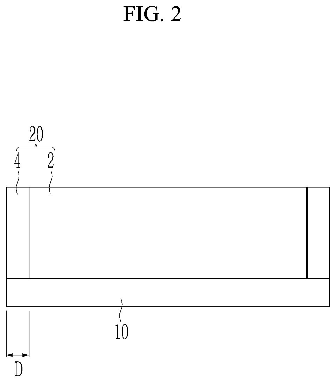

FIG. 1 is a plane view of a negative electrode according to an embodiment of the present disclosure, and FIG. 2 is a cross-sectional view taken along a line II-II of FIG. 1.

As shown in FIGS. 1 and 2, the negative electrode 100 according to the embodiment of the present disclosure includes a substrate (a basic material or a material) 10 and a negative electrode active material layer 20 formed on the substrate 10 and including a negative electrode active material.

The substrate 10 may be selected from the group consisting of a copper foil, a nickel foil, a stainless steel foil, a titanium foil, a nickel foam, a copper foam, a polymer substrate coated with a conductive metal, and a combination thereof.

The negative electrode active material layer 20 may be formed on one surface or both surfaces of the substrate 10 of the negative electrode.

The negative electrode active material included in the negative electrode active material layer 20 may be a carbon-based active material. The carbon-based active material may be artificial graphite or a mixture of artificial graphite and natural graphite. A form of the artificial graphite or the natural graphite may be amorphous, plate-like, flake, spherical, fibrous, or a combination thereof, and may be in any form. When the artificial graphite and the natural graphite are mixed, the mixing ratio may be 70:30 wt% to 95:5 wt%.

In addition, the negative electrode active material layer 20 may further include at least one of a Si-based negative electrode active material, a Sn-based negative electrode active material, and a lithium vanadium oxide negative electrode active material. When the negative electrode active material layer 20 further includes at least one of the Si-based negative electrode active material, the Sn-based negative electrode active material, and the lithium vanadium oxide negative electrode active material (that is, when the negative electrode active material layer 20 includes the carbon-based negative electrode active material that is a first negative electrode active material and a negative electrode active material that is further included in the negative electrode active material layer 20 and is a second negative electrode active material), a mixing ratio of the first negative electrode active material and the second negative electrode active material may be a weight ratio of 50:50 to 99:1.

The Si-based negative electrode active material may be Si, Si-C composite, SiOₓ (0 < x < 2), or a Si-Q alloy (wherein Q is an element selected from the group consisting of an alkali metal, an alkaline-earth metal, a Group 13 element, a Group 14 element, a Group 15 element, a Group 16 element, a transition metal (a transition element), a rare earth element, and a combination thereof, and not Si), and the Sn-based negative electrode active material may be Sn, SnO₂, or a Sn-R alloy (wherein R is an element selected from the group consisting of an alkali metal, an alkaline-earth metal, a Group 13 element, a Group 14 element, a Group 15 element, a Group 16 element, a transition metal (a transition element), a rare earth element, and a combination thereof, and not Sn). At least one of these materials may be mixed with SiO₂. The elements Q and R may be selected from the group consisting of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and a combination thereof.

A content of the negative electrode active material in the negative electrode active material layer 20 may be 95 wt% to 99 wt% with respect to an entire weight of the negative electrode active material layer 20.

In an embodiment of the present disclosure, the negative electrode active material layer 20 includes a binder, and may optionally further include a conductive material. A content of the binder in the negative electrode active material layer 20 may be 1 wt% to 5 wt% with respect to an entire weight of the negative electrode active material layer 20. In addition, when the conductive material is further included in the negative electrode active material layer 20, 90 wt% to 98 wt% of the negative electrode active material, 1 wt% to 5 wt% of the binder, and 1 wt% to 5 wt% of the conductive material may be used.

The binder serves to well attach negative electrode active material particles to each other, and also serves to well attach the negative electrode active material to the substrate that is a current collector.

The negative electrode active material layer 20 according to an embodiment of the present disclosure includes a first active material layer 2 and a second active material layer 4 including different binders.

The first active material layer 2 may include a low-resistance binder, and the second active material layer 4 may include a high adhesive binder having relatively stronger adhesion than the first active material layer 2. In this case, the low-resistance binder may have weak adhesiveness compared with the high adhesive binder but may have low resistance, and conversely, the high adhesive binder may have strong adhesiveness compared with the low-resistance binder but may have high resistance.

The different binders may use a non-water-soluble binder, a water-soluble binder, or a combination thereof. When the water-soluble binder is used as the binder of the negative electrode, the binder of the negative electrode may further include a cellulose-based compound capable of imparting viscosity that is a thickener.

For example, the low-resistance binder may include an acryl-based binder. For example, the low-resistance binder may include a cellulose-based binder such as sodium-carboxymethylcellulose (Na-CMC) or lithium-carboxymethylcellulose (Li-CMC), alginic acid derivative, chitosan derivative, polyvinyl alcohol (PVA), polyacrylic acid (PAA), polysodiumacrylate (Na-PAA), polyvinylpyrrolidone (PVP), polyacrylamide (PAAm), a vinylidene fluoride/hexafluoropropylene copolymer (P(VDF-HFP)), polyvinylidene fluoride (PVDF), polyacrylonitrile (PAN), water-borne styrene-butadiene rubber (SBR), water-borne butadiene rubber (BR), or a modified product thereof (for example, a fluorinated polymer (a polymer in which fluoride is substituted therein), a polymer with a sulfone (-SO₂-) substituent in a main chain thereof, or a copolymer thereof (for example, a random copolymer, a block copolymer, an alternating polymer with other polymers, or the like)). However, the present disclosure is not limited thereto, and any binder available in the art may be used.

The high adhesive binder may include water-borne styrene-butadiene rubber (SBR) or polyacrylic acid (PAA), and may include a compound alone or one or more compounds based on water-borne styrene-butadiene rubber (SBR) or polyacrylic acid (PAA).

The conductive material may be used to impart conductivity to the electrode, and any conductive material that does not cause a chemical change and conducts an electron may be used.

The second active material layer 4 including the high adhesive binder may be disposed at an edge of the first active material layer 2 to surround at least a portion of the first active material layer 2. As shown in FIG. 1, the second active material layer 4 may be formed to surround an entire first active material layer 2, but the present disclosure is not limited thereto, and the second active material layer 4 may be formed only at a portion of edges of the first active material layer 2 such as upper and lower edges or left and right edges facing each other of the first active material layer 2.

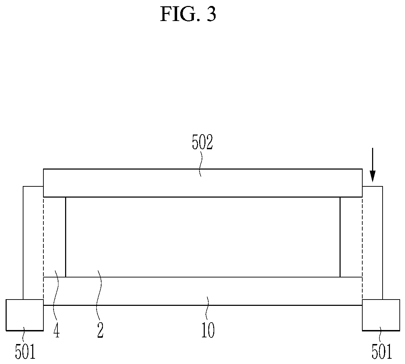

FIG. 3 is a view for explaining a method for cutting an electrode plate according to an embodiment of the present disclosure.

As shown in FIG. 3 according to the embodiment of the present disclosure, during a notching process of cutting the electrode plate produced in a form of a reel into sheets, a sheet (or a negative electrode sheet) is disposed on a die 501 and then the electrode plate is cut by a cutting blade 502 to produce the electrode. In this case, the cutting blade 502 relatively cuts the second active material layer 4 including the high adhesive binder. Thus, a cut surface is formed at the second active material layer 4.

As described above, the second active material layer 4 including the high adhesive binder is cut and the high adhesive binder is strongly attached to the substrate 10, so that even if a strong impact is applied by the cutting blade, a phenomenon in which the substrate 10 is pushed or separated from the second active material layer 4 is reduced. In addition, the second active material layer 4 including the high adhesive binder may reliably form a boundary of the first active material layer 2, and may maintain a shape of the second active material layer 4 even after the cutting impact. Thus, during the cutting, the active material may be detached or occurrence of a crack due to the impact may be reduced.

Since the high adhesive binder may have higher resistance than the low-resistance binder to reduce an electric characteristic of the battery, the second active material layer 4 may be formed with a minimum width that does not affect the first active material layer 2 by the cutting impact. A width D of the second active material layer 4 remaining after the cutting may be 0.01 mm to 5 mm.

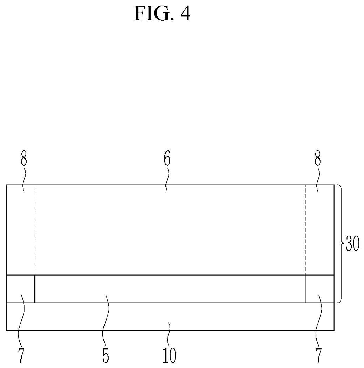

FIG. 4 is a cross-sectional view of an electrode for a rechargeable battery according to another embodiment of the present disclosure.

As shown in FIG. 4, the electrode for the rechargeable battery according to the embodiment of the present disclosure includes the substrate 10 and a negative electrode active material layer 30 formed on the substrate 10.

The negative electrode active material layer 30 includes a first lower binder layer 5 formed on the substrate 10 and including a low-resistance binder, a first upper active material layer 6 formed on the first lower binder layer 5, a second lower binder layer 7 formed on the substrate 10 and including a high adhesive binder, and a second upper active material layer 8 formed on the second lower binder layer 7.

Each of the first lower binder layer 5 and the second lower binder layer 7 may further include a conductive material in addition to the low-resistance binder or the high adhesive binder. For example, the conductive material may include at least one of denka black, carbon black, acetylene black, ketjen black, a carbon fiber, graphene, and a carbon nanotube (CNT).

The first upper active material layer 6 and the second upper active material layer 8 may be formed to have a thickness greater than those of the first lower binder layer 5 and the second lower binder layer 7. The first upper active material layer 6 and the second upper active material layer 8 may include different binders as in the embodiment of FIG. 1, but the present disclosure is not limited thereto, and the first upper active material layer 6 and the second upper active material layer 8 may be made of the active material including the same binder.

During the cutting operation, the active material in contact with the substrate may be detached as the substrate moves down along with the cutting blade at a moment when the cutting blade cuts the substrate, but in an embodiment of the present disclosure, the second lower binder layer 7 including the high adhesive binder may be disposed at a portion through which the cutting blade passes so that the substrate 10 and the upper active material layer are prevented from being separated by the cutting impact or the active material is prevented from being detached by the cutting impact.

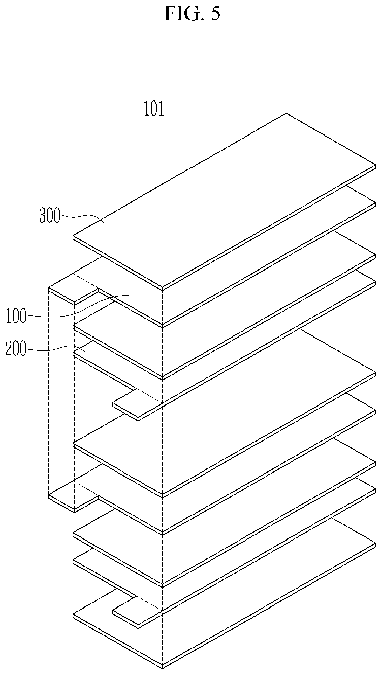

The above negative electrode sheet may be used in a stacked electrode assembly, and an electrode assembly according to an embodiment of the present disclosure will be described below with reference to FIG. 5.

FIG. 5 is a schematic view of the stacked electrode assembly according to the embodiment of the present disclosure.

The electrode assembly 101 according to the embodiment of the present disclosure is the stacked electrode assembly 101 in which negative electrodes 100 and positive electrodes 200 are repeatedly stacked with a separator 300 interposed therebetween.

The separator 300 may be a polymer film that passes a lithium ion, and may use polyethylene, polypropylene, polyvinylidene fluoride, or a multilayer film of two or more layers thereof. In addition, the separator 300 may use a mixed multilayer film such as a polyethylene/polypropylene two-layered separator, a polyethylene/polypropylene/polyethylene three-layered separator, a polypropylene/polyethylene/polypropylene three-layered separator, or the like.

The negative electrode 100 includes an electrode portion in which an active material layer is formed at a current collector of a substrate made of copper (Cu) and an uncoated portion (or an uncoated region) in which the substrate is exposed by not applying the active material. The negative electrode 100 may be a negative electrode including the different binders shown in FIG. 2 or 4.

The positive electrode 200 includes an electrode portion coated with an active material at a current collector of a substrate made of aluminium (Al) and an uncoated portion where the substrate is exposed by not applying the active material.

The active material of the positive electrode 200 may use a compound (a lithiated intercalation compound) capable of reversible intercalation and deintercalation of lithium. Specifically, the active material of the positive electrode 200 may use at least one of a composite oxide of lithium and a metal selected from cobalt, manganese, nickel, and a combination thereof. A content of the positive electrode active material may be 90 wt% to 98 wt% with respect to an entire weight of the positive electrode active material layer.

The positive active material layer may further include a binder and a conductive material. In this case, a content of each of the binder and the conductive material may be 1 wt% to 5 wt% with respect to the entire weight of the positive electrode active material layer.

The binder serves to well attach positive electrode active material particles to each other, and also serves to well attach the positive electrode active material to the substrate that is the current collector. A representative example of the binder may use polyvinyl alcohol, carboxymethyl cellulose, hydroxypropyl cellulose, diacetyl cellulose, polyvinyl chloride, carboxylated polyvinyl chloride, polyvinyl fluoride, a polymer including ethylene oxide, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, or the like, but the present disclosure is not limited thereto. The conductive material may be used to impart conductivity to the electrode, and any conductive material that does not cause a chemical change and conducts an electron may be used.

On the other hand, a plurality of uncoated portions of the positive electrode 200 and the negative electrode 100 may be electrically connected to an external terminal by being electrically connected to each other with the same polarity. The uncoated portion of the positive electrode 200 and the uncoated portion of the negative electrode 100 may protrude in the same direction, but the present disclosure is not limited thereto, and the uncoated portion of the positive electrode 200 and the uncoated portion of the negative electrode 100 may protrude in opposite directions and may be spaced apart from each other.

The separator 300 may be larger than the negative electrode 100 and the positive electrode 200 to protrude outside the negative electrode 100 and the positive electrode 200.

The electrode assembly 101 may be used as the rechargeable battery by being accommodated together with an electrolyte in a prismatic case in a form of a pouch or a can.

The electrolyte includes a non-aqueous organic solvent and a lithium salt. The non-aqueous organic solvent serves as a medium for movement of ions involved in an electrochemical reaction of the battery.

The lithium salt is a material dissolving in the organic solvent to act as a supply source of the lithium ion within the battery. Thus, the lithium salt enables a basic operation of a lithium rechargeable battery, and serves to promote movement of the lithium ion between the positive electrode and the negative electrode. A representative example of the lithium salt includes one or two or more selected from the group consisting of LiPF₆, LiBF₄, LiSbF₆, LiAsF₆, LiN(SO₂C₂F₅)₂, Li(CF₃SO₂)₂N, LiN(SO₃C₂F₅)₂, LiC₄F₉SO₃, LiClO₄, LiAlO₂, LiAlCl₄, LiN(CₓF₂ₓ₊₁SO₂)(C_{y}F_{2y+1}SO₂) (wherein x and y are natural numbers, for example, an integer ranging from 1 to 20), LiCl, Lil, and LiB(C₂O₄)₂ (lithium bis(oxalato) borate (LiBOB)) as a supporting electrolytic salt.

The lithium salt may be used in a concentration ranging from 0.1 M to 2.0 M. When the lithium salt is included at the above concentration range, excellent electrolyte performance may be shown since the electrolyte has appropriate conductivity and viscosity, and the lithium ion may move effectively.

While this disclosure has been described in connection with what is presently considered to be practical embodiments, it is to be understood that the disclosure is not limited to the disclosed embodiments. On the contrary, it is intended to cover various modifications and equivalent arrangements included within the scope of the appended claims.

## Claims

1. An electrode for a rechargeable battery, comprising:
a substrate; and
a first active material layer and a second active material layer that are formed on the substrate and include different binders,
wherein the first active material layer and the second active material layer are disposed on the same plane.

2. The electrode for the rechargeable battery of claim 1, wherein the first active material layer includes a low-resistance binder, and the second active material layer includes a high adhesive binder having stronger adhesion than the low-resistance binder.

3. The electrode for the rechargeable battery of claim 2, wherein the first active material layer includes a first lower binder layer formed on the substrate and including the low-resistance binder, and a first upper active material layer formed on the first lower binder layer, and the second active material layer includes a second lower binder layer formed on the substrate and including the high adhesive binder, and a second upper active material layer formed on the second lower binder layer.

4. The electrode for the rechargeable battery of claim 3, wherein the first upper active material layer and the second upper active material layer include the same binder material.

5. The electrode for the rechargeable battery of claim 3 or claim 4, wherein the first lower binder layer and the second lower binder layer further include a conductive material, and the conductive material includes at least one of denka black, carbon black, acetylene black, ketchen black, a carbon fiber, graphene, and a carbon nanotube.

6. The electrode for the rechargeable battery of any one of claims 3 to 5, wherein thicknesses of the first lower binder layer and the second lower binder layer are less than thicknesses of the first upper active material layer and the second upper active material layer.

7. The electrode for the rechargeable battery of any one of claims 2 to 6, wherein the second active material layer surrounds at least a portion of the first active material layer.

8. The electrode for the rechargeable battery of claim 7, wherein a width of the second active material layer is 0.01 mm to 0.5 mm.

9. The electrode for the rechargeable battery of any one of claims 2 to 8, wherein the substrate has a form of a cut sheet, and the second active material layer is formed at a region where the substrate is cut.

10. The electrode for the rechargeable battery of any one of claims 2 to 9, wherein the low-resistance binder includes at least one of an acryl-based binder, sodium-carboxymethylcellulose, lithium-carboxymethylcellulose, alginic acid derivative, chitosan derivative, polyvinyl alcohol, polyacrylic acid, polysodiumacrylate, polyvinylpyrrolidone, polyacrylamide, a vinylidene fluoride/hexafluoropropylene copolymer, polyvinylidene fluoride, polyacrylonitrile, water-borne styrene-butadiene rubber, water-borne butadiene rubber, and a modified product thereof.

11. The electrode for the rechargeable battery of any one of claims 2 to 10, wherein the high adhesive binder includes water-borne styrene-butadiene rubber or polyacrylic acid.
